# EUROPEAN PATENT APPLICATION

(11) **EP 1 835 646 A1**
(43) Date of publication of application: **19.09.2007**
(21) Application number: 07103612.3
(22) Date of filing: 06.03.2007
(51) Int. Cl.: H04J 3/06, G06F 1/04, G06F 1/14

(54) **Data processing apparatus for synchronizing a plurality of CPU modules.**

(30) Priority: 15.03.2006 JP 2006071096
(71) Applicant: NEC CORPORATION, Tokyo (JP)
(72) Inventor: Shirano, Yasuyuki, Tokyo (JP)
(74) Representative: Betten & Resch

(57) **Abstract**

A data processing apparatus includes a plurality of CPU modules each including a CPU . Each of the plurality of CPU module includes a clock source, a clock counter, an I/O module, a first data adder, and a timing adjuster. The first data adder reads a value of the clock counter, adds a predetermined offset value to the read value to generate a timing value, and adds the generated timing value to the packet designated to the CPU. The timing adjuster adjusts timing of transmitting the packet to the CPU, based on the timing value of the packet received from the first data adder and the value of the clock counter.

## Description

### BACKGROUND OF THE INVENTION

### 1. Field of the Invention

The present invention relates to a data processing apparatus including a plurality of CPU (Central Processing Unit) modules which are operated synchronously with each other.

### 2. Description of the Related Art

A data processing apparatus including a plurality of CPU modules which are operated synchronously with each other is known. The synchronization between the CPU modules is conventionally performed by inputting a clock from a clock source that is common to all of the CPU modules. However, such a data processing apparatus has a problem in that the operations of all the CPU modules are stoppedwhen a fault occurs in the common clock source.

To cope with the problem, for example, in the data processing apparatus as disclosed in JP 07-73059 A, each of the CPU modules recognizes the values of the mutual clock counters, and the CPU modules which are respectively operated based on the clocks from the individual clock sources are made synchronous with each other.

In this case, each CPU module transmits and receives the value of the mutual clock counter as a packet to and from the other CPU modules. In that case, each CPU module cannot execute the exact synchronizing process, unless the arrival time of its counter packet is constant. When the counter packet is transmitted and received through a general signal line, the counter packet receives the influence of a general packet, and an arrival time thereof is not constant. Thus, when the counter packet is transmitted and received through the general signal line, the data processing apparatus must include a dedicated configuration, for example, a configuration in which the counter packet is preferentially processed without any influence of the general packet. Alternatively, the data processing apparatus must include the signal line dedicated to the clock counter information, which is different from the general signal line, to transmit and receive the general packet and the like. In any case, the configuration of the data processing apparatus becomes large in scale and complex.

### SUMMARY OF THE INVENTION

The present invention has been made to solve the above-mentioned problems. An exemplary feature of the present invention is to provide a data processing apparatus capable of synchronizing a plurality of CPU modules each being operated at an independent clock, with a simple configuration.

In an aspect of the present invention, a data processing apparatus includes a plurality of CPU modules each including a CPU. The plurality of CPU modules are connected to each other through a cross link. Each of the plurality of CPU module includes a clock source which supplies a clock to the CPU of its own, a clock counter which counts the clocks from the clock source, an I/O module which transmits and receives a predetermined packet to and from the CPU, a first data adder which, when a packet designated to the CPU is received from the I/O module, reads a value of the clock counter, adds a predetermined offset value to the read value to generate a timing value, and adds the generated timing value to the packet designated to the CPU, and a timing adjuster which adjusts timing of transmitting the packet to the CPU, based on the timing value of the packet received from the first data adder and the value of the clock counter.

The CPU module constituting the data processing apparatus of the present invention adds the timing value for defining its processing timing of to the packet to be transmitted to the CPU from the I/O module, and processes the packet based on the value of the clock counter of its own and the timing value. Thus, the data processing apparatus makes it possible to synchronize the plurality of CPU modules each being operated at the independent clock.

Further, the data processing apparatus of the present invention is operated based on the timing value added to the packet and the value of the clock counter of each CPU module. Thus, the counter value of the synchronous partner is not required to be known. Consequently, according to the data processing apparatus of the present invention, there is no need for the general signal line to be provided with the special configuration to prevent a counter packet from receiving the influence of the general packet. Also, there is no need for the data processing apparatus to be provided with the signal line dedicated to the counter packet between the CPU modules.

### BRIEF DESCRIPTION OF THE DRAWINGS

The above and other objects, features and advantages of the present invention will become more apparent from the following detailed description when taken in conjunction with the accompanying drawings wherein:
FIG. 1 shows an example of a control block diagram of a data processing apparatus according to a first embodiment of the present invention;
FIG. 2 shows an example of a sequence diagram for illustrating an operation of resetting a CPU and a clock counter of each CPU module in the data processing apparatus shown in FIG. 1;
FIG. 3 shows an example of a sequence diagram for illustrating an operation performed in the data processing apparatus shown in FIG. 1, in which the CPU transmits a request packet to an I/O module and receives a response packet for the request packet from the I/O module;
FIG. 4 shows an example of a sequence diagram illustrating an operation performed in the data processing apparatus shown in FIG. 1, in which the I/O module transmits a request packet to the CPU and receives a response packet for the request packet from the CPU;
FIG. 5 shows an example of a sequence diagram illustrating an operation performed in the data processing apparatus shown in FIG. 1, the CPU receives an interruption packet periodically transmitted from the I/O module and resets the clock counter in response to the interruption packet;
FIG. 6 is a graph explicitly showing a fact that a clock counter deviation amount between the CPU modules fall in a certain range by the periodical resetting process explained with reference to FIG. 5; and
FIG. 7 shows an example of a control block diagram of a data processing apparatus according to a second embodiment of the present invention.

### DETAILED DESCRIPTION OF THE EXEMPLARY EMBODIMENTS

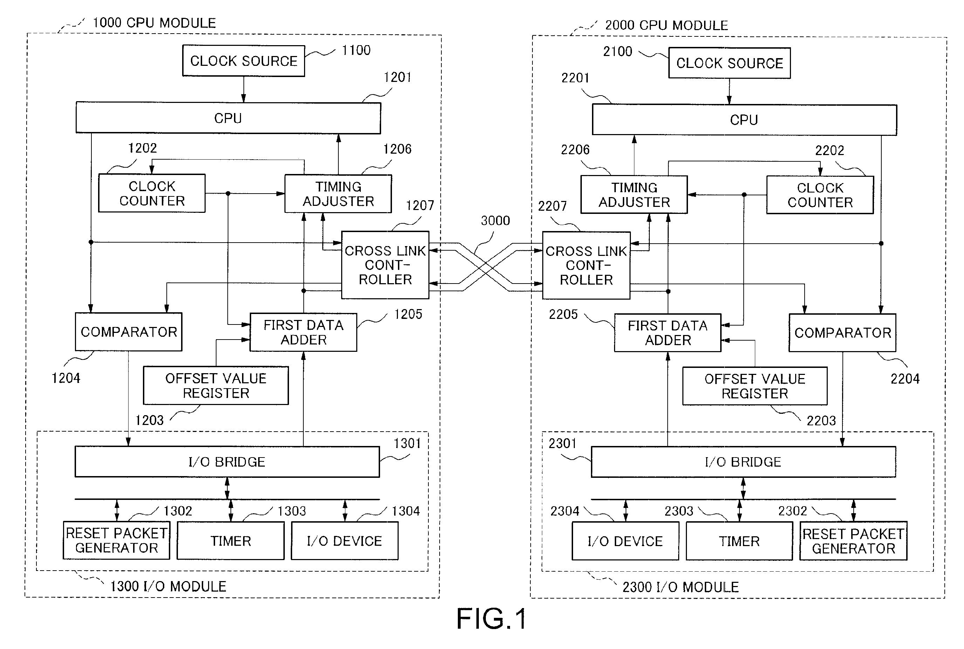

FIG. 1 shows an example of a control block diagram of a data processing apparatus according to a first embodiment of the present invention. The data processing apparatus includes a CPU module 1000 and a CPU module 2000. The CPU module 1000 and the CPU module 2000 are connected through a cross link 3000.

The CPU module 1000 includes a clock source 1100, a CPU 1201, a clock counter 1202, an offset value register 1203, a comparator 1204, a first data adder 1205, a timing adjuster 1206, a cross link controller 1207 and an I/O module 1300.

The CPU 1201 executes a series of command rows, and is composed of, for example, CPU (central processing unit) and its peripheral circuit.

The clock counter 1202 counts the clocks from the clock source 1100. The clock counter 1202 resets the counter value when receiving a reset instruction of a counter value from the timing adjuster 1206. Usually, the clock counter 1202 and a clock counter 2202 in the CPU module 2000 are reset when the CPU 1201 and a CPU 2201 in the CPU module 2000 start a synchronizing operation.

The offset value register 1203 stores a preset offset value. The offset value is a value equal to or greater than the necessary minimum number of the clocks, for example, until the packet transmitted from the first data adder 1205 in the CPU module 1000 is received by a timing adjuster 2206 in the CPU module 2000 through the cross link 3000.

The comparator 1204 checks whether or not the packet received from the CPU 1201 and the packet received from the CPU 2201 in the CPU module 2000 through the cross link 300 are coincident. If the packets are coincident with each other, the comparator 1204 chooses one of the packets and transmits it to the I/O module 1300. In this case, the comparator 1204 can also buffer the packet transmitted from the CPU 1201 and the packet transmitted from the CPU 2201.

The first data adder 1205 reads the value of the clock counter 1202 when receiving the packet designated to the CPU from the I/O module 1300, adds the value of the offset value register 1203 to that value to generate a timing value, and then adds the generated timing value to the packet. The first data adder 1205 transmits the packet with the timing value to the timing adjuster 1206 and the cross link controller 1207.

The timing adjuster 1206 receives the packet added with the timing value from the first data adder 1205 in the CPU module 1000 or a first data adder 2205 in the CPU module 2000. Then, the timing adjuster 1206 waits until the value of the clock counter 1202 becomes coincident with the timing value added to the received packet, and transmits the packet to the CPU 1201 when they are coincident with each other. It should be noted that the timing adjuster 1206 executes a control so that the processing order of the packets is not different between the CPU modules 1000 and 2000 when the timing values of the packet received from the first data adder 1205 in the CPU module 1000 and the packet received from the first data adder 2205 in the CPU module 2000 are coincident with each other. For example, the timing adj uster 1206 can buffer the packet received from the first data adder 1205 and the packet received from the first data adder 2205.

The cross link controller 1207 transmits the packet transmitted from the CPU 1201 to a comparator 2204 in the CPU module 2000 through the cross link 3000 and a cross link controller 2207 in the CPU module 2000. Also, the cross link controller 1207 transmits the packet transmitted from the first data adder 1205 to the timing adjuster 2206 through the cross link 3000 and the cross link controller 2207. Moreover, the cross link controller 1207 receives the packet transmitted from the CPU 2201 in the CPU module 2000 through the cross link controller 2207 and the cross link 3000, and transmits to the comparator 1204. Further, the cross link controller 1207 receives the packet transmitted from the first data adder 2205 in the CPU module 2000 through the cross link controller 2207 and the cross link 3000, and transmits to the timing adjuster 1206.

The I/O module 1300 includes an I/O bridge 1301, a reset packet generator 1302, a timer 1303 and an I/O device 1304. The I/O bridge 1301 receives the packet from the comparator 1204 and transmits the packet to at least one of the reset packet generator 1302, the timer 1303 and the I/O device 1304. Further, the I/O bridge 1301 receives the packets transmitted from the reset packet generator 1302, the timer 1303 and the I/O device 1304, and transmits the packet to the first data adder 1205. The reset packet generator 1302 generates the reset packet when the generation of a reset packet is required by the CPUs 1201 and 2201, and transmits the packet to the first data adder 1205 through the I/O bridge 1301. The timer 1303 generates a timer interruption packet for each elapse of a predetermined time, and transmits the packet to the first data adder 1205 through the I/O bridge 1301. The I/O device 1304 is composed of an SCSI controller, a LAN adapter and the like.

The CPU module 2000 includes a clock source 2100, the CPU 2201, the clock counter 2202, an offset value register 2203, the comparator 2204, the first data adder 2205, the timing adjuster 2206, the cross link controller 2207, and an I/O module 2300. Since those members are equal to those of the CPU module 1000, the explanations thereof are omitted.

It should be noted that the respective CPUs 1201, 2201 can discriminate the I/O modules 1300, 2300, respectively. However, since the CPU 1201 and the CPU 2201 are synchronously operated, they are recognized as one CPU from the respective I/O modules 1300 and 2300, and both of them cannot be discriminated.

The cross link 3000 establishes the connection between the CPU module 1000 and the CPU module 2000. The cross link 3000 is composed of a parallel interface such as a PCI bus, and a serial interface such as PCI-Express, and the like. The cross link 3000 is essential for the data processing apparatus having the plurality of CPU modules, and is not a special signal line.

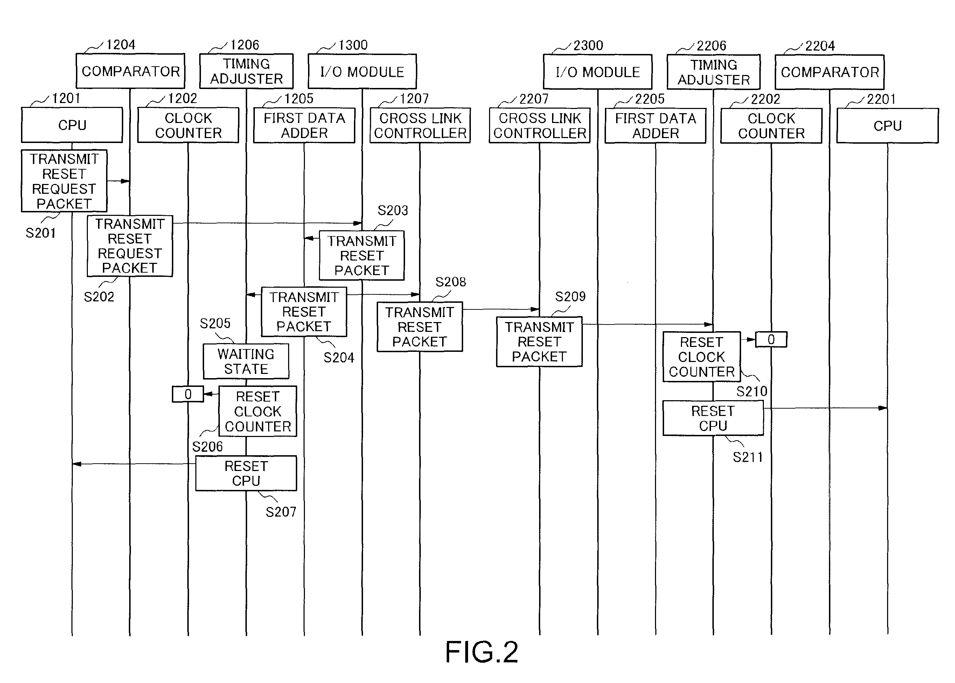

FIG. 2 shows an example of a sequence diagram illustrating the operation of resetting the CPU 1201 and clock counter 1202 in the CPU module 1000, and the CPU 2201 and clock counter 2202 in the CPU module 2000 in the data processing apparatus of the first embodiment of the present invention.

The resets of the clock counter 1202 and CPU 1201 in the CPU module 1000 and the clock counter 2202 and CPU 2201 in the CPU module 2000 are executed based on the reset packet transmitted from the reset packet generator 1302 in the CPU module 1000 or a reset packet generator 2302 in the CPU module 2000.

The reset packet generator 1302 or the reset packet generator 2302 generates the reset packet when receiving a reset request packet from the CPU 1201 or the CPU 2201. There are no restrictions on whether the data processing apparatus carries out the reset using the reset packet generator 1302 or the reset packet generator 2302. Hereinafter, there is exemplified as a case where the reset packet generator 1302 in the CPU module 1000 is used to reset the clock counter 1202 and CPU 1201 in the CPU module 1000 and the clock counter 2202 and CPU 2201 in the CPU module 2000.

First, the CPU 1201 transmits the reset request packet to the comparator 1204 (Step S201) . At this time, the CPU 1201 and the CPU 2201 are not synchronous with each other. Accordingly, the comparator 1204 transmits the reset request packet to the reset packet generator 1302 in the I /0 module 1300 without waiting for the transmission of the same packet from the CPU 2201 (Step S202) .

The reset packet generator 1302 generates the reset packet when receiving the reset request packet, and transmits the reset packet to the first data adder 1205 (Step S203) . The first data adder 1205 transmits the reset request packet to the timing adjuster 1206 and the cross link controller 1207 when receiving the reset packet fromthe reset packet generator 1302 (Step S204).

The timing adjuster 1206 refers to a transmission source of the received reset packet, and judges whether or not the reset packet is passed through the cross link 3000. In this case, the transmission source of the reset packet is the reset packet generator 1302, and the reset packet is not passed through the cross link 3000. Accordingly, the timing adjuster 1206, after waiting for the elapse of a preset clock cycle (Step S205), resets the clock counter 1202 (Step S206). After that, the timing adjuster 1206 resets the CPU 1201 (Step S207) .

On the other hand, the cross link controller 1207 transmits the reset packet received from the first data adder 1205 to the cross link controller 2207 through the cross link 3000 (Step S208) . The cross link controller 2207 transmits the received reset packet to the timing adjuster 2206 (Step S209) .

The timing adjuster 2206 refers to a transmission source ID of the received reset packet, and judges whether or not the reset packet is passed through the cross link 3000. In this case, the transmission source is the reset packet generator 1302 in the CPU module 1000, and the reset packet is passed through the cross link 3000. For this reason, the timing adjuster 2206 does not enter into a waiting state and immediately resets the clock counter 2202 (StepS210) . Moreover, after that, the timing adjuster 2206 resets the CPU 2201 (Step S211) .

By the above-mentioned operations, the clock deviation between the clock counter 1202 and the clock counter 2202 is removed. After that, the synchronous operation between the CPUs 1201 and 2201 is started.

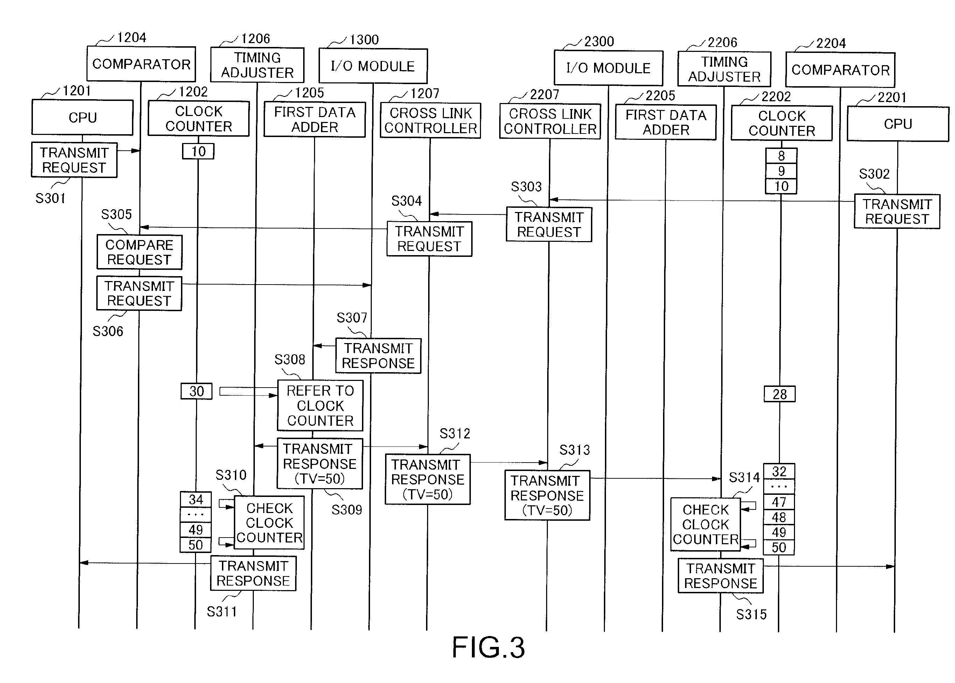

FIG. 3 shows an example of a sequence diagram illustrating the operation in which the CPU 1201 and the CPU 2201 transmit a request packet to the I/O module 1300 and receive a response packet for the request from the I/O module 1300.

First, the CPU 1201 transmits the request packet designated to the I/O module 1300 to the comparator 1204 (Step S301). It should be noted that the value of the clock counter 1202 in this case is, for example, 10. It should be noted that the CPU 1201 and the CPU 2201 synchronously execute the same command row. Thus, the CPU 2201 also transmits the request packet designated to the I/O module 1300 to the cross link controller 2207 when the value of the clock counter 2202 becomes 10 (Step S302). The cross link controller 2207 transmits the received request packet to the cross link controller 1207 through the cross link 3000 (Step S303). The cross link controller 1207 transmits the received request packet to the comparator 1204 (Step S304) .

The comparator 1204 compares the response packet received from the CPU 1201 and the response packet received from the CPU 2201 (Step S305). When a fault is not generated in the data processing apparatus, these two request packets are coincident. The comparator 1204 chooses one of the request packets and transmits the request packet to the I/O module 1300 (Step S306) .

The I/O module 1300 judges whether or not the received packet is the packet requiring a response. In this case, the received packet is the request packet. Thus, the I/O module 1300 generates a response packet and transmits the generated packet to the first data adder 1205 (Step S307).

The first data adder 1205 refers to the clock counter 1202 (Step S308) when receiving the response packet. It should be noted that the value of the clock counter 1202 at this time is, for example, 30. Besides, the value of the offset value register 1203 is, for example, 20. The first data adder 1205 adds the value (=20) of the offset value register 1203 to the value (=30) of the clock counter 1202 and adds its value as a timing value TV (=50) to the response packet. The first data adder 1205 transmits the response packet, added with the timing value TV to the timing adjuster 1206 and the cross link controller 1207

### (Step S309) .

The timing adjuster 1206 refers to the timing value TV added to the response packet when receiving the response packet, and executes the waiting until the value of the clock counter 1202 becomes equal to the timing value TV (Step S 310) . The timing adjuster 1206 transmits the response packet to the CPU 1201 when the value of the clock counter 1202 becomes equal to the timing value TV (Step S311) .

On the other hand, the cross link controller 1207 transmits the response packet received from the first data adder 1205, through the cross link 3000 to the cross link controller 2207 (Step S312). The cross link controller 2207 transmits the received response packet to the timing adjuster 2206 (StepS313) .

The timing adjuster 2206 refers to the timing value TV added to the response packet when receiving the response packet, and executes the waiting until the value of the clock counter 2202 becomes equal to the timing value TV (Step S314) . The timing adjuster 2206 transmits the response packet to the CPU 2201 when the value of the clock counter 2202 becomes equal to the timing value TV (Step S315) .

As described above, both of the CPU 1201 and the CPU 2201 transmit the request packet when the values of the clock counter 1202 and the clock counter 2202 are 10, and receive the response packet when the values of the clock counter 1202 and the clock counter 2202 are 50.

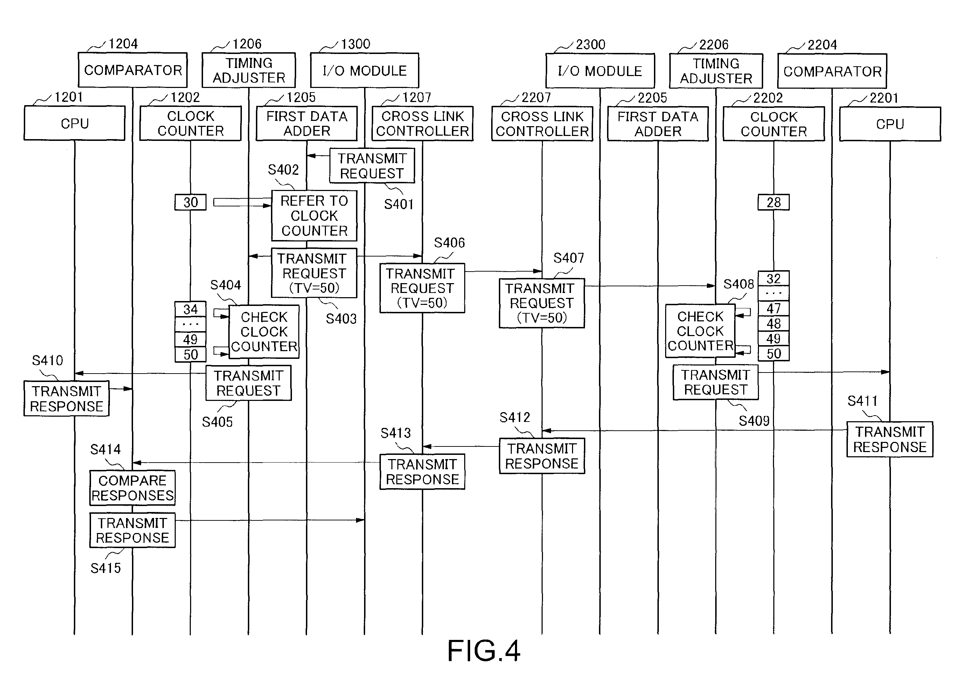

FIG. 4 shows an example of a sequence diagram illustrating the operation in which the I/O module 1300 transmits the request packet to the CPU 1201 and the CPU 2201 and receives the response packet for the request packet from the CPU 1201 and the CPU 2201.

The I/O module 1300 transmits the request packets designated to the CPU 1201 and the CPU 2201, to the first data adder 1205 (Step S401). The first data adder 1205 refers to the clock counter 1202 when receiving the request packet from the I/O module 1300 (Step S402). It should be noted that the value of the clock counter 1202 in this case is, for example, 30. Besides, the value of the offset value register 1203 is, for example, 20. The first data adder 1205 adds the value (=20) of the offset value register 1203 to the value (=30) of the clock counter 1202 and adds the value as the timing value TV (=50) to the request packet. The first data adder 1205 transmits the request packet added with the timing value TV to the timing adjuster 1206 and the cross link controller 1207 (Step S403) .

The timing adjuster 1206 refers to the timing value TV added to the request packet when receiving the request packet, and executes the waiting until the value of the clock counter 1202 becomes equal to the timing value TV (= 50) (Step S404) . The timing adjuster 1206 transmits the request packet to the CPU 1201 when the value of the clock counter 1202 becomes equal to the timing value TV (Step S405).

On the other hand, the cross link controller 1207 transmits the request packet received fromthe first data adder 1205 through the cross link 3000 to the cross link controller 2207 (Step S406) . The cross link controller 2207 transmits the received request packet to the timing adjuster 2206 (Step S407) .

The timing adjuster 2206 refers to the timing value TV added to the request packet when receiving the request packet, and executes the waiting until the value of the clock counter 2202 becomes equal to the timing value TV (Step S408). The timing adjuster 2206 transmits the response packet to the CPU 2201 when the value of the clock counter 2202 becomes equal to the timing value TV (Step S409).

The CPU 1201 judges whether or not the received request packet is the packet requiring the response, and transmits the response packet to the comparator 1204 when the response is required (Step S410).

On the other hand, the CPU 2201 judges whether or not the received request packet is the packet requiring the response, and if the response is required, transmits the response packet to the cross link controller 2207 (Step S411). The cross link controller 2207 transmits the response packet to the cross link controller 1207 through the cross link 3000 (Step S412) . The cross link controller 1207 transmits the received response packet to the comparator 1204 (Step S413) .

The comparator 1204 compares the response packet received from the CPU 1201 and the response packet received from the CPU 2201 (Step S414).

When a fault is not generated in the data processing apparatus, those two response packets are coincident with each other. The comparator 1204 chooses one of the response packets and transmits the response packet to the I/O module 1300 (Step S415) .

As described above, both of the CPU 1201 and the CPU 2201 receive the request packet when the values of the clock counter 1202 and the clock counter 2202 are 50.

As described above, as illustrated with reference to FIG. 3 and FIG. 4, the CPU module constituting the data processing apparatus adds the timing value defining its processing timing to the packet to be transmitted to the CPU from the I/O module, and processes the packet based on the value of the clock counter of its own and the timing value. Accordingly, the data processing apparatus makes it possible to synchronize the plurality of CPU modules each being operated at the independent clock.

Moreover, the data processing apparatus is operated based on the timing value added to the packet and the value of the clock counter of each CPU module. Accordingly, it is not necessary to know the counter value of the synchronous partner. Hence, in the data processing apparatus, there is no need for the general signal line to be provided with the special configuration to prevent the counter packet from receiving the influence of the general packet. Further, there is no need for the data processing apparatus to be provided with the signal line dedicated to the counter packet between the CPU modules.

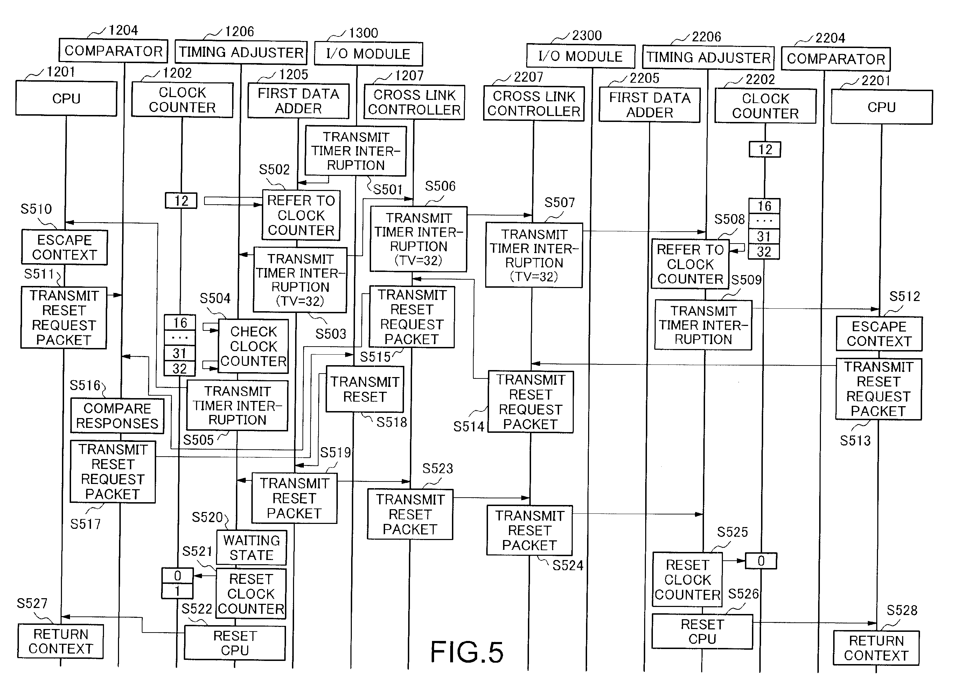

FIG. 5 shows an example of a sequence diagram illustrating the operation in which the CPU 1201 and the CPU 2201 receive the interruption packet periodically transmitted from the I/O module 1300, and reset the respective clock counters 1202 and 2202 in response to the interruption packet.

The timer 1303 in the I/O module 1300 transmits a timer interruption packet to the first data adder 1205 for each elapse of a predetermined time (Step S501).

The first data adder 1205 refers to the clock counter 1202 when receiving the timer interruption packet (Step S502). It should be noted that the value of the clock counter 1202 at this time is, for example, 12. Besides, the value of the offset value register 1203 is, for example, 20. The first data adder 1205 adds the value (=20) of the offset value register 1203 to the value (=12) of the clock counter 1202 and adds the value as a timing value TV (=32) to the timer interruption packet. The first data adder 1205 transmits the timer interruption packet added with the timing value TV to the timing adjuster 1206 and the cross link controller 1207 (Step S503).

The timing adjuster 1206 refers to the timing value TV added to the timer interruption packet when receiving the timer interruption packet, and executes the waiting until the value of the clock counter 1202 becomes equal to the timing value TV (=32) (Step S504) . The timing adjuster 1206 transmits the timer interruption packet to the CPU 1201 when the value of the clock counter 1202 becomes equal to the timing value TV (Step S505) .

On the other hand, the cross link controller 1207 transmits the timer interruption packet received from the first data adder 1205 to the cross link controller 2207 through the cross link 3000 (Step S506).

The cross link controller 2207 transmits the received timer interruption packet to the timing adjuster 2206 (Step S507) .

The timing adjuster 2206 refers to the timing value TV added to the timer interruption packet when receiving the timer interruption packet, and executes the waiting until the value of the clock counter 2202 becomes equal to the timing value TV (Step S508). The timing adjuster 2206 transmits the timer interruption packet to the CPU 2201 when the value of the clock counter 2202 becomes equal to the timing value TV (Step S509) .

The CPU 1201 first escapes a context when receiving the timer interruption packet (Step S510). After that, the CPU 1201 transmits a reset request packet designated to the reset packet generator 1302 to the comparator 1204 (Step S511) .

On the other hand, the CPU 2201 first escapes a context when receiving the timer interruption packet (Step S512). After that, the CPU 2201 transmits a reset request packet designated to the reset packet generator 1302 to the cross link controller 2207 (Step S513).

The cross link controller 2207 transmits the received reset request packet to the cross link controller 1207 through the cross link 3000 (Step S514) .

The cross link controller 1207 transmits the received reset request packet to the comparator 1204 through the cross link 3000 (Step S515) .

The comparator 1204 compares the reset request packet received from the CPU 1201 and the reset request packet received from the CPU 2201 (Step S516) . When a fault is not generated in the data processing apparatus, those two response packets are coincident with each other. The comparator 1204 chooses one of the reset request packets and transmits the chosen reset request packet to the I/O module 1300 (Step S517).

The reset packet generator 1302 that received the reset request packet through the I/O bridge 1301 transmits the reset packet, which is assigned the transmission source ID to identify the I/O module to the first data adder 1205 (Step S518) .

The first data adder 1205 transmits the received reset packet to the timing adjuster 1206 and the cross link controller 1207 (Step S519).

The timing adjuster 1206 refers to a transmission source ID of the received reset packet, and judges whether or not the reset packet is passed through the cross link 3000. In this case, the transmission source of the reset packet is the reset packet generator 1302, and the reset packet is not passed through the cross link 3000. In this case, the timing adjuster 1206, after waiting for the elapse of a preset clock cycle (Step S520), resets the clock counter 1202 (StepS521) . After that, the timing adjuster 1206 resets the CPU 1201 (Step S522).

On the other hand, the cross link controller 1207 transmits the reset packet received from the first data adder 1205 to the cross link controller 2207 through the cross link 3000 (Step S523). The cross link controller 2207 transmits the received reset packet to the timing adjuster 2206 (Step S524) .

The timing adjuster 2206 refers to a transmission source ID of the received reset packet, and judges whether or not the reset packet is passed through the cross link 3000. In this case, the transmission source is the reset packet generator 1302 in the CPU module 1000, and the reset packet is passed through the cross link 3000. In this case, the timing adjuster 2206 does not enter into the waiting state, and immediately resets the clock counter 2202 (Step S525) . Moreover, after that, the timing adjuster 2206 resets the CPU 2201 (Step S526).

Incidentally, the CPU 1201 after being completed the reset returns the context escaped prior to the reset (Step S527) . On the other hand, the CPU 2201 returns the context escaped prior to the reset (Step S528) .

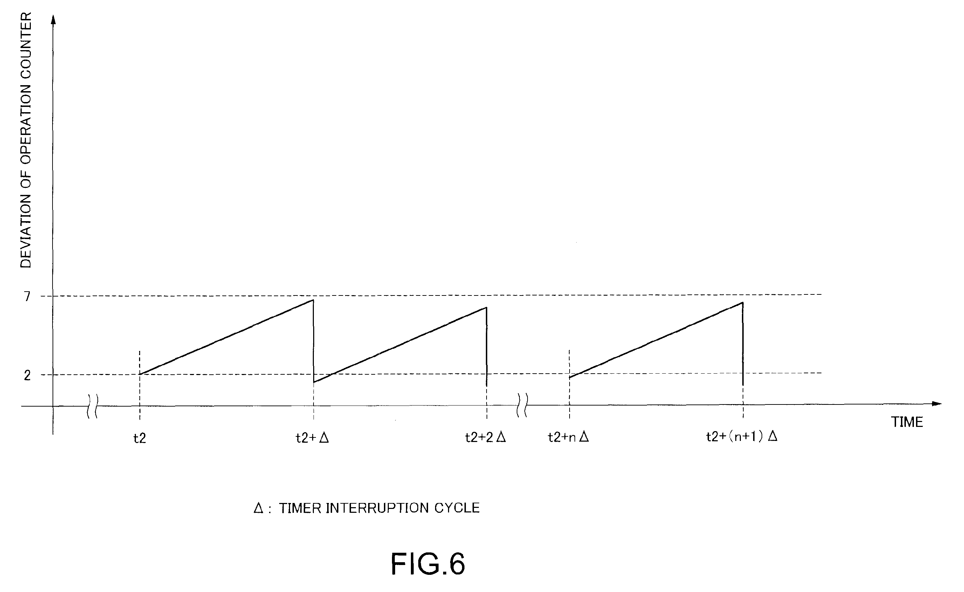

FIG. 6 is a graph explicitly illustrating a fact that the deviation amount between the clock counter 1202 and the clock counter 2202 falls in a certain range by the periodical resetting process illustrated with reference to FIG. 5. In Fig. 6, an abscissa indicates a time, and an ordinate indicates the deviation amount between the clock counter 1202 and the clock counter 2202. After the execution of the reset at a time t2, the deviation between the clock counter 1202 and the clock counter 2202 is increased based on a ratio between an average frequency of the clock source 1100 and an average frequency of the clock source 2100. However, the CPUs 1201 and 2201 and the clock counters 1202 and 2202 are again reset by the timer interruption issued for each Δ cycle. With this operation, the deviation amount between the clock counter 1202 and the clock counter 2202 can be suppressed to a certain range, for example, 7 or less in FIG. 6. In this way, it is possible to continue the synchronous operation between the CPU 1201 and the CPU 2201.

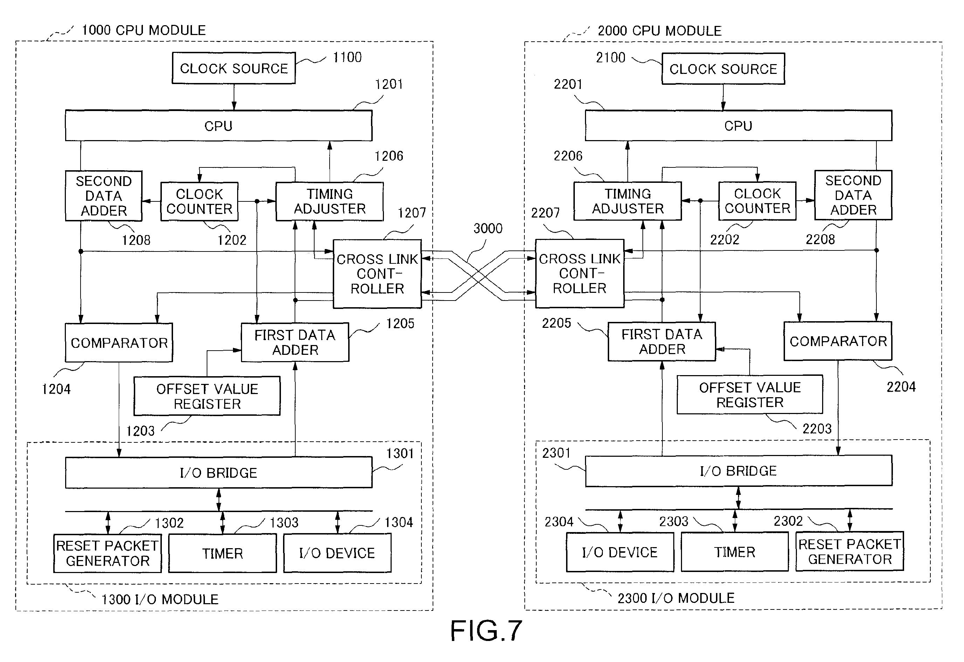

FIG. 7 shows an example of a control block diagram of a data processing apparatus according to a second embodiment of the present invention. The difference from the data processing apparatus in the first embodiment of the data processing apparatus in the second embodiment lies in the point that the respective CPU modules 1000 and 2000 further include second data adders 1208 and 2208.

The second data adder 1208 (2208) adds the value of the clock counter 1202 (2202) to the packet transmitted from the CPU 1201 (CPU 2201). The comparator 1204 (2204) compares the packet transmitted from the CPU 1201 and the packet transmitted from the CPU 2201 during the synchronous operation. However, in this case, the comparator 1204 (2204) compares the values of the clock counters which are added to the respective packets. The comparison leads to the early detection of the synchronous mismatching between the CPU 1201 and the CPU 2201.

It should be noted that in the above-mentioned examples, the data processing apparatus including the CPU modules of two systems is exemplified. However, the number of the systems is not limited to the two systems, and the three systems or more can be employed.

While the present invention has been described in connection with certain exemplary embodiments, it is to be understood that the subject matter encompassed by way of the present invention is not to be limited to those specific embodiments. On the contrary, it is intended for the subject matter of the invention to include all alternatives, modifications and equivalents as can be included within the spirit and scope of the following claims.

Further, it is the inventor's intent to retain all equivalents of the claimed invention even if the claims are amended during prosecution.

An embodiment of the present invention may be summarised as follows. A data processing apparatus includes a plurality of CPU modules each including a CPU. Each of the plurality of CPUmodule includes a clock source, a clock counter, an I/O module, a first data adder, and a timing adjuster. The first data adder reads a value of the clock counter, adds a predetermined offset value to the read value to generate a timing value, and adds the generated timing value to the packet designated to the CPU. The timing adjuster adjusts timing of transmitting the packet to the CPU, based on the timing value of the packet received from the first data adder and the value of the clock counter.

## Claims

1. A data processing apparatus comprising a plurality of CPU modules each including a CPU, the plurality of CPU modules being connected to each other through a cross link;
wherein each of the plurality of CPU module comprises:
a clock source which supplies a clock to the CPU of its own;
a clock counter which counts the clocks from the clock source;
an I/O module which transmits and receives a predetermined packet to and from the CPU;
a first data adder which, when a packet designated to the CPU is received from the I/O module, reads a value of the clock counter, adds a predetermined offset value to the read value to generate a timing value, and adds the generated timing value to the packet designated to the CPU; and
a timing adjuster which adjusts timing of transmitting the packet to the CPU, based on the timing value of the packet received from the first data adder and the value of the clock counter.

2. The data processing apparatus according to claim 1, wherein each of the CPU module further comprises a comparator which compares the packet designated to the I/O module received from the CPU of its own with the packet designated to the I/O module received from the CPU of another CPU module through the cross link, and transmits one of the packets to the I/O module, when both the packets are coincident with each other.

3. The data processing apparatus according to claim 2, wherein each of the CPU module further comprises a second data adder which adds the value of the clock counter to the packet designated to the I/O module received from the CPU of its own, and transmits the packet to the comparator of one of the CPU modules of its own and another.

4. The data processing apparatus according to claim 3, wherein the comparator compares each of the values of the clock counters to be added to the respective packets when comparing the packets received fromthe second data adders of the CPU modules of its own and another.

5. The data processing apparatus according to one of claims 1 to 4, wherein the I/O module comprises a reset packet generator which generates a reset packet for resetting the clock counter, and transmits the reset packet to the timing adjuster.

6. The data processing apparatus according to claim 5, wherein the timing adjuster judges whether or not the received reset packet is received through the cross link, and determines timing of resetting the clock counter based on the judgement result.

7. The data processing apparatus according to claim 6, wherein the timing adjuster immediately resets the clock counter when the received reset packet is received through the cross link, and resets the clock counter after an elapse of a predetermined time when the received reset packet is not received through the cross link.

8. The data processing apparatus according to claim 6, wherein the reset packet is assigned an authentication code to specify the CPU module of a transmission source.

9. The data processing apparatus according to claim 5, wherein the reset packet generator generates and transmits the reset packet in response to a reset packet request from the CPU.

10. The data processing apparatus according to claim 5, wherein the I/O module transmits an interruption packet to the CPU for each elapse of a predetermined time.

11. The data processing apparatus according to claim 10, wherein the CPU requests the reset packet generator to transmit the reset packet for each reception of the interruption packet.

12. The data processing apparatus according to claim 7, wherein the timing adjuster resets the CPU when receiving the reset packet.
